# EUROPÄISCHE PATENTANMELDUNG

(11) **EP 0 814 137 A2**
(43) Veröffentlichungstag der Anmeldung: **29.12.1997**
(21) Anmeldenummer: 97108416.5
(22) Anmeldetag: 24.05.1997
(51) Int. Cl.: C09D 163/00, C08G 59/12

(54) **Beschichtungsmittel für die Innenbeschichtung von Blechemballagen**

(30) Priorität: 20.06.1996 DE 19624565
(71) Anmelder: BASF Lacke + Farben AG, 48165 Münster-Hiltrup (DE)
(72) Erfinder: Schmitz, Arno, Dr., 48165 Münster (DE); Vogdanis, Lazaros, Dr., 48157 Münster (DE)

(57) **Zusammenfassung**

Die Erfindung betrifft Beschichtungsmittel für die Beschichtung von Blechemballagen, enthaltend:
A) 20 bis 70 Gew.-% eines Bindemittels bestehend aus:
   Aa) 10 bis 80 Gew.-Teilen mindestens eines Epoxidharzes mit einem zahlenmittleren Molekulargewicht Mn von 300 bis 10.000 Dalton,
   Ab) 1 bis 30 Gew.-% mindestens einer niedermolekularen Di- und/oder Polycarbonsäure mit Alkylengruppen, die mindestens zwei C-Atome aufweisen, zwischen den Carboxylgruppen und
   Ac) 5 bis 50 Gew.-Teilen mindestens eines organischen Lösemittels,
B) 1 bis 20 Gew.-% mindestens eines Phenolharzes,
C) 0 bis 10 Gew.-% mindestens eines Aminoplastharzes,
D) 0 bis 10 Gew.-% mindestens eines thermoplastischen Harzes,
E) 0 bis 35 Gew.-% Pigmente und/oder Füllstoffe,
F) 0 bis 10 Gew.-% Hilfsstoffe und/oder Additive sowie
G) 5 bis 50 Gew.-% mindestens eines organischen Lösemittels,
wobei die Summe der Komponenten A) bis G) 100 Gew.-%, bezogen auf das Beschichtungsmittel, ausmacht, sowie Verfahren zur Herstellung von Beschichtungen von Blechemballagen und Verwendungen der Beschichtungsmittel.

## Beschreibung

### Gebiet der Erfindung

Die Erfindung betrifft Beschichtungsmittel für die Innen- und Außenbeschichtung von Blechemballagen, insbesondere von Blechmaterialien zur Herstellung von Aufreißdeckeln, enthaltend:
A) 20 bis 70 Gew.-% eines Bindemittels bestehend aus:
   Aa) 10 bis 80 Gew.-Teilen mindestens eines Epoxidharzes mit einem zahlenmittleren Molekulargewicht Mn von 300 bis 10.000 Dalton,
   Ab) 1 bis 30 Gew.-% mindestens einer niedermolekularen Di- und/oder Polycarbonsäure mit Alkylengruppen, die mindestens zwei C-Atome aufweisen, zwischen den Carboxylgruppen und
   Ac) 5 bis 50 Gew.-Teilen mindestens eines organischen Lösemittels,
B) 1 bis 20 Gew.-% mindestens eines Phenolharzes,
C) 0 bis 10 Gew.-% mindestens eines Aminoplastharzes,
D) 0 bis 10 Gew.-% mindestens eines thermoplastischen Harzes,
E) 0 bis 35 Gew.-% Pigmente und/oder Füllstoffe,
F) 0 bis 10 Gew.-% Hilfsstoffe und/oder Additive sowie
G) 5 bis 50 Gew.-% mindestens eines organischen Lösemittels, wobei die Summe der Anteile A) bis G) 100 Gew.-% ausmacht.

### Stand der Technik

Zur Herstellung von Blechemballagen, insbesondere von Dosen für den Einsatz als Verpackungsmaterialien, insbesondere für die Verpackung von Lebensmitteln, werden Bleche aus Weißblech, chromatiertem Stahl oder Aluminium in Bandform (Coil Coating) oder Tafelform beschichtet. Die Lackschicht wirkt als Schutzschicht, um einerseits das Metall vor dem Angriff des Füllguts und daraus resultierender Korrosion zu schützen und um andererseits eine Beeinflussung des Füllguts durch Korrosionsprodukte des Metalls zu verhindern. Selbstverständlich darf es auch durch die Lackschicht selbst, etwa durch herausgelöste Lackbestandteile, zu keiner Beeinflussung bzw. Beeinträchtigung des Füllguts kommen, weder bei der im Falle der Lebensmittelverpackungen im Anschluß an die Abfüllung durchgeführten Sterilisation des Füllguts noch bei der anschließenden Lagerung der verpackten Güter. Im Falle der technischen Verpackungen handelt es sich oftmals um chemisch reaktive bzw. aggressive Füllgüter, gegen die die Lackschichten beständig sein müssen. Weiterhin müssen die Lacke derart aufgebaut sein, daß sie den bei der Weiterverarbeitung der beschichteten Bleche zu den Emballagen, insbesondere Dosen, auftretenden mechanischen Beanspruchungen, etwa beim Verformen, Stanzen, Bördeln und Sicken der Bleche, standhalten.
Typischerweise als Blechemballagen-Innenschutzlacke eingesetzt werden die sogenannten Goldlacke auf der Basis von hochmolekularen Epoxidharzen und Phenolharzen vom Resoltyp, die teilverethert oder anderweitig plastifiziert sind. Dabei ist es möglich, die Lacke noch mit weiteren Lackschichten, auch auf anderer Harzbasis, zu versehen, beispielsweise wenn besonders hochwertiger Korrosionsschutz in Verbindung mit einer kritischen Blechverformung und/oder eine besonders lange Lagerzeit gefüllter Dosen gefordert werden.
Derartige Lacke weisen in der Regel Feststoffgehalte von 35 bis 40 Gew.-% auf und sind in ihrer Flexibilität beschränkt, so daß sich die Einsatzmöglichkeit im allgemeinen auf dreiteilige Konservendosen beschränkt.
Epoxy-Phenolharz-Lacke für die Herstellung von zweiteiligen Dosen und Aufreißdeckeln müssen im allgemeinen mit sehr hochmolekularen Epoxidharzen formuliert werden, wodurch bei Verarbeitungsviskosität lediglich Feststoffgehalte von weniger als 34%, üblicherweise zwischen 25 und 33%, realisiert werden können. Dadurch bedingt wird insbesondere die übliche Walzenapplikation von Einschichtlackierungen mit Schichtdicken > 10 Mikrometern sehr schwierig.
Für besondere Anwendungen werden auch Epoxid-Aminoharz-Lacke eingesetzt, die jedoch eine größere Empfindlichkeit gegenüber ungünstigen Blechoberflächen sowie eine geringere Beständigkeit gegenüber sauren Füllgütern aufweisen.
Weiterhin werden üblicherweise auch Innenschutzlacke auf Basis von hydroxylgruppenhaltigen Polyestern und Aminoharzen eingesetzt.
Auch Polvinylchlorid(PVC)-Organosole finden Anwendung, insbesondere für Aufreißdeckel aus Aluminium oder aus Weißblech und für tiefgezogene Dosen, wobei hier der erzielbare hohe Festkörpergehalt sowie die gute Filmelastizität selbst bei dickerem Lackauftrag Beachtung verdienen.
Ein entscheidender Nachteil dieser Lacke ist, daß die Entsorgung von PVC-haltigen Abfällen zunehmend problematisch und kostenintensiv wird.
Die Bemühungen gehen daher verstärkt dahin, PVC-freie Innenschutzlacke zur Verfügung zu stellen. So sind beispielsweise aus der PCT-Anmeldung WO 88/01287 PVC-freie Doseninnenlacke bekannt. Diese Doseninnenlacke enthalten ein modiziertes Epoxidharz als Bindemittel und Phenoplast- und/oder Aminoplastharz als Vernetzungsmittel, wobei das Bindemittel auf einem Umsetzungsprodukt aus einem Epoxidharz, Polyestercarbonsäuren und ethylenisch ungesättigten Monomeren basiert. Weiterhin sind aus der US-PS 4,018,848 Doseninnenlacke bekannt, die 30 bis 65 Gew.-% eines niedermolekularen Epoxidharzes als Bindemittel, 10 bis 35 Gew.-% eines Amino- oder Phenolplastharzes als Vernetzer und 0,5 bis 10 Gew.-% eines Säurekatalysators enthalten. Zur Verbesserung der Flexibilität enthalten diese Dosenlacke 20 bis 40 Gew.-% eines thermoplastischen hydroxylgruppenhaltigen Polyesters. Um eine Reaktion der einzelnen Komponenten des Lacks untereinander zu vermeiden, sind diese Doseninnenlacke als Zweikomponentensystem formuliert.
Aus den US-Patentschriften US-PS 4,382,525 und US-PS 4,451,506 sind Beschichtungsmittel zur Schweißnahtabdeckung von Dosen bekannt, die eine Lösung mindestens eines thermoreativen Harzes und eine Dispersion eines thermoplastischen Harzes enthalten. Die thermoplastischen Harze enthalten Carboxylgruppen und sind ausgewählt aus der Gruppe der Polyester, Vinylester-, Maleinsäure- oder Acrylat-Homo- oder Copolymerisate, Ionomeren, Polyamide, Polyurethane, Polyharnstoffe und ähnliche. Die thermoreaktiven Harze sind die üblicherweise eingesetzten Harze, bevorzugt Mischungen aus einem Epoxidharz und einem Phenoplast-, Aminoplast- oder Acrylatharz. Im Unterschied zu Doseninnenlacken werden an Schweißnahtabdeckungen insbesondere hohe Anforderungen hinsichtlich Adhäsion an der Schweißnaht bei gleichzeitiger Wirkung als Barriere gegen korrosive Stoffe gestellt, während bei Doseninnenlacken neben der Beständigkeit gegenüber dem Füllgut gute Verformungseigenschaften der Beschichtung von besonderer Bedeutung sind.
In der JP-A-61043664 werden Beschichtungsmittel zur Schweißnahtabdeckung von Dosen beschrieben, die aus einem Gemisch aus einem Epoxyesterharz, erhältlich durch Umsetzung eines Bisphenol-A-Epoxidharzes mit höheren Fettsäuren, einem Phenolharz des Resoltyps und/oder einem Aminoplastharz und einem gesättigen Polyesterharz in einem organischen Lösemittel bestehen.
Von der EP-A-0 394 887 umfaßt werden Beschichtungsmittel, insbesondere für Doseninnenseiten, enthaltend als Bindemittel ein Polyamid-Epoxyesterharz mit einem gewichtsmittleren Molekulargewicht Mw zwischen 1.000 und 100.000 Dalton, einem Epoxidäquivalentgewicht von 500 bis 10.000 Dalton und einer Säurezahl < 10 mg KOH/g, erhältlich durch Umsezung eines Epoxidharzes, basierend auf einem Bisphenol-Glycidylether, mit einem zweiwertigen Phenol und einer Polyamiddicarbonsäure, erhältlich durch Umsetzung einer polymerisierten Fettsäure, basierend auf einer Dimerfettsäure, mit einem Diamin. In DE-A-40 10 167 schließlich wird ein Verfahren zur Innenbeschichtung von Blechemballagen beschrieben, bei dem ein Beschichtungsmittel auf Basis eines carboxylgruppenhaltigen Polyesters und eines Phenolharzes appliziert wird. Das Beschichtungsmittel enthält 10 bis 30 Gew.-% mindestens eines carboxylgruppenhaltigen Polyesters, 7 bis 22 Gew.-% mindestens eines Phenolharzes, 4 bis 27 Gew.-% mindestens eines thermoplastischen Harzes, 0 bis 7 Gew.-% mindestens eines Epoxidharzes, 0 bis 6 Gew.-% mindestens eines Aminoplastharzes, 30 bis 70 Gew.-% mindestens eines organischen Lösemittels sowie den üblichen Pigmenten und/oder Füllstoffen bzw. Additive und/oder Hilfsstoffe.
Die gemäß DE-A-40 10 167 resultierenden Beschichtungen sind PVC-frei, weisen eine gute Flexibilität und eine gute Haftung auf dem Blech auf, halten den mechanischen Beanspruchungen bei der Weiterverarbeitung der Bleche stand und sind bei Sterilisations- und Pasteurisationsbedingungen migrationsbeständig.

### Aufgabe und Lösung

Trotz des durch die Emballagen-Innenbeschichtungsmittel des Standes der Technik, beispielsweise durch die DE-A-40 10 167, schon vorgegebenen hohen Eigenschaftsniveaus der resultierenden Innenbeschichtungen bestand weiterhin das Bedürfnis nach Innenbeschichtungsmitteln für Blechemballagen, insbesondere aus Aluminiumblech, die aus einer vergleichsweise geringen Zahl an Komponenten einfach herstellbar sind, die PVC-frei und damit einfach und kostengünstig entsorgbar sind,die insbesondere einen hohen Feststoffgehalt aufweisen und die insbesondere in Schichtdicken > 10 Mikrometer einfach zu applizieren sind. Weiterhin sollen die resultierenden Innenbeschichtungen ein hohes Eigenschaftsniveau, wie insbesondere eine hohe Beständigkeit gegenüber verschiedensten Füllgütern bei Pasteurisations- und Sterilisationsbedingungen, eine hohe Haftung zum Blech, eine hohe Flexibiliät und hohe Beständigkeit gegen mechanische Beanspruchungen, wie sie beispielsweise bei der Weiterverarbeitung der Bleche zu Dosen durch Verformen, Bördeln und Sicken der Bleche auftreten, aufweisen. Die Innenbeschichtungen sollten sich insbesondere auch für die Herstellung von Aufreißdeckeln, auch "Easy-Open-Ends" genannt, eignen, bei deren Herstellung das beschichtete Blech extremen mechanischen Verformungen durch Stanzen unterworfen wird.

Überraschenderweise wurde gefunden, daß bei der Beschichtung von Blechemballagen Beschichtungen mit einem hervorragenden Eigenschaftsniveau erhalten werden können, wenn ein Beschichtungsmittel eingesetzt wird, enthaltend:
A) 20 bis 70 Gew.-% eines Bindemittels BM bestehend aus:
   Aa) 10 bis 80 Gew.-Teilen mindestens eines Epoxidharzes mit einem zahlenmittleren Molekulargewicht Mn von 300 bis 10.000 Dalton,
   Ab) 1 bis 30 Gew.-% mindestens einer niedermolekularen Di- und/oder Polycarbonsäure mit Alkylengruppen, die mindestens zwei C-Atome aufweisen, zwischen den Carboxylgruppen und
   Ac) 5 bis 40 Gew.-Teilen mindestens eines organischen Lösemittels,
B) 1 bis 20 Gew.-% mindestens eines Phenolharzes,
C) 0 bis 10 Gew.-% mindestens eines Aminoplastharzes,
D) 0 bis 10 Gew.-% mindestens eines thermoplastischen Harzes,
E) 0 bis 35 Gew.-% Pigmente und/oder Füllstoffe,
F) 0 bis 10 Gew.-% Hilfsstoffe und/oder Additive sowie
G) 5 bis 50 Gew.-% mindestens eines organischen Lösemittels, wobei die Summe der Anteile A) bis G) 100 Gew.-% ausmacht.

Vorzugsweise weist das Epoxidharz A) ein zahlenmittleres Molekulargewicht Mn zwischen 350 und 6000 Dalton auf.

Weiterhin bevorzugt weisen die zwischen den Carboxylgruppen der Di- und/oder Polycarbonsäure B) befindlichen Alkylengruppen mindestens drei, besonders bevorzugt mindestens vier C-Atome, auf. Ganz besonders bevorzugt sind als Di- und/oder Polycarbonsäuren Di- und/oder Trimerfettsäuren mit mindestens 18 C-Atomen pro Molekül.
Bevorzugt eingesetzte Phenolharze C) sind Reaktionsprodukte von Phenol, substituierten Phenolen und Bisphenol-A mit Formaldehyd, die vorzugsweise unter alkalischen Bedingungen hergestellt worden sind. Unter derartigen Bedingungen wird die Methylolgruppe entweder ortho- oder para-ständig mit dem aromatischen Ring verknüpft.
Weiterhin bevorzugt werden die methylolischen Hydroxylgruppen der Phenolharze C) mit niederen Alkoholen, wie beispielsweise Ethanol, Propanol oder Isobutanol, besonders bevorzugt mit n-Butanol, verethert.
Besonders bevorzugt werden niedrigviskose Phenolharze C) eingesetzt, deren 50 bis 60 %ige Lösungen eine Viskosität bei 20 Grad C von weniger als 1000 mPas, bevorzugt von 300 bis 900 mPas aufweisen.

Gegenstand der vorliegenden Erfindung ist außerdem ein Verfahren zur Innenbeschichtung von Blechemballagen, bei welchem das erfindungsgemäße Beschichtungsmittel appliziert und eingebrannt wird, sowie die Verwendung der Beschichtungsmittel zur Innenbeschichtung von Blechemballagen, vorzugsweise für Aufreißdeckel.

Die erfindungsgemäßen Beschichtungsmittel sind PVC-frei, wodurch eine einfache und kostengünstige Entsorgung der beschichteten Emballagen möglich wird. Schließlich zeichnen sich die resultierenden Beschichtungen durch eine hohe Flexibilität und Haftung zum Blech aus. Dadurch ist gewährleistet, daß die Beschichtungen den bei der Weiterverarbeitung der beschichteten Bleche zu den Emballagen, insbesondere zu Dosen und Aufreißdeckeln, auftretenden mechanischen Beanspruchungen, wie beispielsweise beim Verformen, Bördeln, Sicken oder insbesondere beim Stanzen (beispielsweise bei den Aufreißdeckeln), standhalten.

### Durchführung der Erfindung

### Die Bestandteile des Beschichtungsmittels

Das zu 20 bis 70 Gew.-%, bevorzugt zu 30 bis 65 Gew.-%, bezogen auf das Beschichtungsmittel, im Beschichtungsmittel anwesende Bindemittel A) ist aufgebaut aus:
Aa) 10 bis 80 Gew.-Teilen, vorzugsweise 15 bis 70 Gew.-Teilen, mindestens eines Epoxidharzes mit einem zahlenmittleren Molekulargewicht Mn von 300 bis 10.000 Dalton,
Ab) 1 bis 30 Gew.-Teilen, vorzugsweise 2 bis 25 Gew.-Teilen, mindestens einer niedermolekularen Di- und/oder Polycarbonsäure mit Alkylengruppen, die mindestens zwei C-Atome aufweisen, zwischen den Carboxylgruppen,
Ac) 5 bis 50 Gew.-Teilen, vorzugsweise 10 bis 45 Gew.-Teilen, mindestens eines organischen Lösemittels.

Die Epoxidharze Aa) sind bekannt. Sie weisen ein zahlenmittleres Molekulargewicht Mn zwischen 300 und 10.000 Dalton, bevorzugt zwischen 350 und 6.000 Dalton, auf.
Als Epoxidharze Aa) beispielsweise geeignet sind aromatische, aliphatische und/oder cycloaliphatische Epoxidharze, wobei z.B. aromatische Epoxidharze auf Basis Bisphenol-A und/oder Bisphenol-F und/oder Epoxidharze von Novolak-Typ eingesetzt werden können. Solche Epoxidharze auf Basis Bisphenol-A oder Bisphenol-F weisen im allgemeinen Epoxidäquivalentgewichte zwischen 500 und 2000 Dalton auf. Epoxidharze vom Novolak-Typ weisen beispielsweise Epoxidäquivalentgewichte von 500 bis 1000 Dalton auf. Epoxidharze vom Bisphenol-A- bzw. vom Bisphenol-F-Typ weisen im allgemeinen eine Funktionalität von maximal 2 auf und Epoxidharze vom Novolak-Typ eine Funktionalität von mindestens 2 auf. Jedoch können auch Epoxidharze auf Basis von Bisphenol-A bzw. Bisphenol-F durch Verzweigung, beispielsweise mittels Trimethylolpropan, Glycerin, Pentaerythrit oder anderer Verzweigungreagenzien, auf eine Funktionalität von größer 2 gebracht werden.
Selbstverständlich können auch andere Epoxidharze, wie beispielsweise Alkylenglykolglycidylether oder deren verzweigte Folgeprodukte, oder mit Alkylenglykolen flexibilisierte Epoxidharze auf Basis Bisphenol-A oder Bisphenol-F, eingesetzt werden. Ferner sind auch Mischungen verschiedener der genannten Epoxidharze geeignet.
Geeignete Epoxidharze sind beispielsweise die unter folgenden Namen im Handel erhältlichen Produkte: Epikote® 828, 872, 1001, 1002, 1004, 1007, 1009, 1055, 2009 der Firma Shell Chemie, XZ 86 795 sowie DER® 662, 664, 667, 669, 642U und 672U der Firma Dow sowie Araldit® GT 6064, GT 7004, GT 7072, GT 7097, GT 7203, GT 7220 und GT 7304 der Firma Ciba-Geigy.

In einer bevorzugten Ausführungsform der Erfindung wird das Epoxidharz Aa) in einem ersten Schritt mit mindestens einer niedermolekularen Di- und/oder Polycarbonsäure Ab), die in Mengen von 1 bis 30 Gew.-Teilen, bevorzugt von 2 bis 25 Gew.-Teilen, bezogen auf das Beschichtungsmittel, im Beschichtungsmittel anwesend ist, zum Bindemittel des Beschichtungsmittels umgesetzt.

Die Di- und/oder Polycarbonsäuren Ab) weisen mindestens eine Alkylengruppe zwischen den Carboxylgruppen auf, wobei die Alkylengruppe mindestens zwei C-Atome, bevorzugt mindestens drei C-Atome und besonders bevorzugt mindestens vier C-Atome enthält.
Als Dicarbonsäuren Ab) können beispielsweise eingesetzt werden: gesättigte Dicarbonsäuren, wie Bernsteinsäure, Glutarsäure, Adipinsäure, Pimelinsäure, Suberinsäure, Azelainsäure, Sebacinsäure oder höhere Homologe, z.B. Dodecandisäure oder Hexadecandisäure.
Bevorzugt sind Dimerfettsäuren, die beispielsweise durch Diels-Alder-Reaktion von einfach ungesättigten mit konjugiert doppelt ungesättigten Fettsäuren oder die aus zwei einfach ungesättigten Fettsäuren durch Reaktionen nach dem En-Mechanismus oder dem Carbeniumion-Mechanismus gebildet werden können. Beispielhaft für Dimerfettsäuren seien Dimere von ungesättigten C25-Carbonsäuren und vorzugsweise Dimere von ein- oder mehrfach ungesättigten C18-Carbonsäuren genannt, die z.B. unter den Handelsnamen Pripol® 1004, 1008, 1009, 1013, 1017 und in hydrierter Form z.B. unter dem Handelsnamen Pripol® 1025 der Firma Unichema erhältlich sind.
Als Tri- oder Polycarbonsäure können beispielsweise eingesetzt werden: gesättigte Tricarbonsäuren, wie Zitronensäure, ungesättigte Tricarbonsäuren, wie Aconitsäure, oder bevorzugt Trimerfettsäuren, wie beispielsweise vorzugsweise Trimere von ein- oder mehrfach ungesättigten C18-Carbonsäuren, die z.B: unter dem Handelsnamen Pripol® 1040 der Firma Unichema erhältlich sind.

Gewöhnlich enthalten die Dimerfettsäuren Anteile an Trimerfettsäuren und umgekehrt. Vorzugsweise sind die Dimerfettsäuren und die Trimerfettsäuren vollständig gesättigt, beispielsweise durch Hydrierung.

Die im Bindemittel A) in 5 bis 50 Gew.-%, bevorzugt in 10 bis 45 Gew.-Teilen, enthaltenen Lösemittel Ac) dienen einerseits zur Lösung der Komponenten Aa) und Ab) und andererseits zur Einstellung einer für die Applikation günstigen Viskosität des Bindemittels A).
Geeignete Lösemittel Ac) sind beispielsweise: 1-Methoxypropanol, Methoxypropylacetat, Propylacetat, Butylacetat, Butylglykolacetat, Butyldiglykolacetat, Butylacetat, Glykolether, Ethoxyethylpropionat, Ester von Dicarbonsäuren, Methylethylketon, Diethylketon, Aceton, Ethanol, Xylol, Toluol und ähnliche, sowie aromatische, aliphatische und cycloaliphatische Kohlenwasserstoffe, wie beispielsweise Solventnaphtha®, verschiedene Shellsol®- und Solvesso®-Typen, Deasol® und verschiedene Testbenzine.

Als Vernetzungsmittel enthalten die Beschichtungsmittel 1 bis 20 Gew.-%, bevorzugt 2 bis 15 Gew.-%, bezogen auf das Beschichtungsmittel, mindestens Phenolharzes C).
Bevorzugte Phenolharze sind unter alkalischen Bedingungen hergestellte Reaktionsprodukte von Phenol, substituierten Phenolen und Bisphenol-A mit Formaldehyd. Unter derartigen Bedingungen wird die Methylolgruppe entweder ortho- oder para-ständig mit dem aromatischen Ring verknüpft.
Weiterhin bevorzugt werden die methylolischen Hydropxylgruppen der Phenolharze C) mit niederen Alkoholen, wie beispielsweise Ethanol, Propanol oder Isobutanol, besonders bevorzugt mit n-Butanol, verethert.
Besonders bevorzugt werden niedrigviskose Phenolharze C) eingesetzt, deren 50 bis 60 %ige Lösungen eine Viskosität bei 20 Grad C von weniger als 1000 mPas, bevorzugt von 300 bis 900 mPas aufweisen. Bevorzugt werden Phenolharze vom Resoltyp eingesetzt.

Die erfindungsgemäßen Beschichtungsmittel enthalten gegebenenfalls mindestens ein Aminoplastharz D) in Mengen zwischen 0 und 10 Gew.-%, bevorzugt zwischen 0 und 5 Gew.-%, bezogen auf das Beschichtungsmittel.
Bevorzugt werden Melaminnarze eingesetzt, die mit einem Alkohol, wie beispielsweise Methanol oder Butanol, verethert sind. Besonders bevorzugt wird Hexabutoxymethylmelaminharz eingesetzt.

Weiterhin können die erfindungsgemäßen Beschichtungsmittel gegebenenfalls 0 bis 10 Gew.-%, bevorzugt 0 bis 5 Gew.-%, bezogen auf das Beschichtungsmittel, mindestens eines thermoplastischen Harzes D) enthalten.
Es werden dabei im allgemeinen halogenfreie thermoplastische Harze mit einer Glasübergangstemperatur oberhalb der Raumtemperatur, bevorzugt einer Glasübergangstemperatur zwischen 30 und 200 Grad C, eingesetzt. Die thermoplastischen Harze sind üblicherweise in den organischen Lösemitteln G) gelöst. Beispiele für geeignete Lösemittel G) sind die schon zuvor beschriebenen Lösemittel Propylacetat, Butylacetat, Methylethylketon, Diethylketon, Aceton, Ethanol, Xylol, Toluol und ähnliche.

Gegebenenfalls im Beschichtungsmittel enthalten sind in Mengen von 0 bis 35 Gew.-%, bevorzugt von 0 bis 30 Gew.-%, bezogen auf das Beschichtungsmittel, Pigmente und/oder Füllstoffe E).
Geeignet sind organische und anorganische Pigmente, wie beispielsweise Titandioxid, Eisenoxide oder Phthalocyanin-Pigmente. Bevorzugt werden die Beschichtungsmittel allerdings unpigmentiert eingesetzt. Als Füllstoffe kommen beispielsweise Talkum, Glimmer, Kaolin, Kreide, Quarzmehl, Schiefermehl, Bariumsulfat, verschiedene Kieselsäuren oder Silikate in Frage. Bevorzugt sind aber Beschichtungsmittel, die keine oder nur transparente Füllstoffe enthalten.

Außerdem können die Beschichtungsmittel in Anteilen von 0 bis 15 Gew.-%, bevorzugt von 1 bis 10 Gew.-%, bezogen auf das Beschichtungsmittel, weitere Additive und/oder Hilfsstoffe F) enthalten, wie beispielsweise Verlaufsmittel, Benetzungsmittel, Entschäumer, PVC-freie Weichmacher, wie Adipinsäureester, Wachse, wie Polyolefinwachse, Carnaubawachse, Bienenwachs oder Lanolinwachs, sowie Katalysatoren für die Vernetzungsreaktion, wie Säurekatalysatoren, z.B. Phosphorsäurelösungen oder p-Toluolsulfonsäurelösungen.

Die in den erfindungsgemäßen Beschichtungsmitteln zu 5 bis 50 Gew.-%, bevorzugt zu 10 bis 40 Gew.-%, bezogen auf das Beschichtungsmittel, enthaltenen Lösemittel G) dienen einerseits, wie schon oben ausgeführt, zur Losung der Komponenten A) bis D), andererseits zur Einstellung einer für die Applikation günstigen Viskosität.
Geeignete Lösemittel G) sind die bereits bei der Beschreibung der Komponente Ac) aufgeführten Lösemittel sowie aromatische, aliphatische und cycloaliphatische Kohlenwasserstoffe, wie beispielsweise Solventnaphtha®, verschiedene Shellsol®- und Solvesso®-Typen, Deasol® und verschiedene Testbenzine.

### Herstellung und Applikation der Beschichtungsmittel

Die Herstellung der Beschichtungsmittel erfolgt in üblicher Weise durch Vermischen der Komponenten. Mitunter ist es nützlich, eine Komponente, falls sie nicht in flüssiger Form vorliegt, zunächst in einem Lösungsmittel G) zu lösen und diese Lösung mit den übrigen Komponenten zu vermischen. Die Einarbeitung der gegebenenfalls enthaltenen Pigmente und/oder Füllstoffe erfolgt im allgemeinen durch Anreiben der Pigmente mit einer der Komponenten A) bis D) und Zumischen der übrigen Komponenten.

Die Beschichtungsmassen können durch Spritzen, Fluten, Tauchen, Walzen, Rakeln oder Streichen aufgebracht werden, wobei der Film anschließend zu einem festhaftenden Überzug gehärtet wird. Die Beschichtungsmassen werden dabei bevorzugt als Einschichtlackierung mit einer Trockenfilmschichtdicke von im allgemeinen 4 bis 20 Mikrometer aufgebracht. Selbstverständlich können die Beschichtungsmittel aber auch als Zweischichtlackierung aufgebracht werden. Dabei beträgt dann die Trockenfilmschichtdicke der Grundierung im allgemeinen zwischen 3 und 8 Mikrometer, die des Decklacks im allgemeinen zwischen 3 und 12 Mikrometer.

Die Beschichtungsmassen härten im Temperaturbereich zwischen 150 und 280 Grad C (Ofentemperatur) während einer Zeit von etwa 10 Sekunden bis 30 Minuten aus.

Die erfindungsgemäßen Beschichtungsmittel eignen sich zur Innenbeschichtung von Blechemballagen, wie beispielsweise Dosen, Eimern, Kanistern, Tuben, sowie bevorzugt von Blechen für Aufreißdeckel. Die Emballagen oder Bleche können aus den unterschiedlichsten Blechmaterialien bestehen und die unterschiedlichsten Geometrien aufweisen.
Als Materialien kommen beispielsweise Schwarzblech, Weißblech, verschiedene Eisenlegierungen und bevorzugt Aluminium in Frage, die gegebenenfalls mit einer Passivierungsschicht versehen sind.
Die Blechemballagen können dabei in verschiedenen Formen, beispielsweise in Form von Dosenhalbteilen, also Rümpfen und Deckeln, bevorzugt Aufreißdeckeln, in Form von dreiteiligen Dosen, also Rümpfen, Böden und Deckeln, bevorzugt Aufreißdeckeln, und in Form von zweiteiligen, abgestreckt oder andersweitig tiefgezogenen Dosen beschichtet werden.

Besonders bevorzugt erfolgt die Innenbeschichtung aber in Form der Bandbeschichtung (Coil Coating) oder der Tafellackierung. Dabei werden zunächst die Bleche in Bandform oder in Tafelform mit dem Innenlack einseitig beschichtet und die zur Herstellung der Blechemballagen erforderlichen Teile anschließend ausgestanzt. Diese bereits beschichteten Teile werden dann zu den entsprechenden Emballagenteieln, beispielsweise Dosenrümpfe, Dosenböden und/oder bevorzugt Deckel, besonders bevorzugt Aufreißdeckel, weiterverarbeitet.

Die folgenden Beispiele sollen die Erfindung näher erläutern, wobei die Erfindung nicht auf diese Beispiele eingeschränkt ist. Alle Angaben über Teile oder Prozente stellen dabei Gewichtsangaben dar, sofern nicht ausdrücklich anders festgestellt.

### Beispiele

### Beispiel 1: Herstellung des Bindemittels A) für das Beschichtungsmittel

In einen geeigneten Reaktor werden in angegebener Reihefolge die folgenden Komponenten eingewogen:
1. 14,992 Gew.-Teile Lösemittel Ac) (Solvesso® 200 der Firma Shell),
2. 8,452 Gew.-Teile Dimerfettsäure Ab) (Pripol® 1013 der Firma Unichema),
3. 51,517 Gew.-Teile Epoxidharz Aa) (Epikote® 1055 der Firma Shell) und
4. 0,030 Gew.-Teile Ethyltriphenylphosphoniumiodid als Katalysator (Catalyst® 1201 der Firma Shell).

Zur Herstellung des Bindemittels A) wurde die Reaktionsmischung auf 100 Grad C aufgeheizt, bis das Epoxidharz Aa) aufgelöst ist.
Anschließend wird die Reaktionsmischung auf 165 Grad C aufgeheizt und diese Temperatur solange gehalten, bis eine Säurezahl von < 1 mg KOH/g und ein Epoxidäquivalentgewicht von 1950 bis 2350 Dalton erreicht sind.
Danach wird die Reaktionsmischung auf 120 Grad C abgekühlt und mit
5. 25,009 Gew.-Teilen 1-Methoxypropanol (Solvenon® PM der Firma BASF AG) als weitere Lösemittelkomponente Ac)
angelöst.
Der Feststoffgehalt der resultierenden Lösung des Bindemittels A) liegt zwischen 60,5 und 62,5 %, die Viskosität einer 40 %igen Lösung des Bindemittels A) in Solvesso® 150 der Firma Shell beträgt bei 23 Grad C 8,0 bis 12,0 dPas.

### Beispiel 2: Formulierung der Beschichtungsmittel BM1 und BM2

Aus den folgenden in Tabelle 1 aufgeführten Komponenten werden die Beschichtungsmittel BM1 und BM2 durch Mischen formuliert.

**Tabelle 1**

| Die Beschichtungsmittel BM1 und BM2 | | | |
|---|---|---|---|
| (Angaben jeweils in Gew.-%) | | BM1 | BM |
| 1. | Bindemittel A) gemäß Beispiel 1 | 55,4 | 56,0 |
| 2. | Phenolharz B) | | |
| | Phenodur VPR 1776 der Fa.Hoechst | 5.3 | - |
| | Phenodur PR 307 der Fa.Hoechst AG | - | 1,0 |
| | Uravar XP 2931FB der Fa.DSM | | 6,4 |
| 3. | Aminoplastharz C) | | |
| | Hexabutoxymethylmelamin | 0,6 | - |
| 4. | Additive F) | | |
| | Resiflow FL2 der Fa.Worlee | 0,4 | 0,2 |
| | Carnauba-Wachs-Dispersion (10%ig in 1-Methoxypropanol-2) | 4.2 | 5,2 |
| | Phosphorsäure (85%ig) | 0,6 | 0,2 |
| 5. | Lösemittel G) | | |
| | 1-Methoxypropylacetat-2 | 8,6 | 13,3 |
| | Butanol-1 | 6,3 | 6,4 |
| | Solvesso ^{R} 200 der Fa.Shell | 2,7 | 2,7 |
| | Butylglykolacetat | 8,5 | 8,6 |
| | Methylisobutylketon | 7,4 | - |

| Eigenschaften der Beschichtungsmittel: | | BM1 | BM2 |
|---|---|---|---|
| Festkörper (15 Min., 200 Grad C) | | 37% | 38% |
| Viskosität (DIN4-Becher, 20 Grad C) | | 90 s | 90 s |
| Farbe | | farblos | goldfarben |

| Auftrag der Beschichtungsmittel: | | BM1 | BM2 |
|---|---|---|---|
| Trocknung: | | 10 s (250^{o}C) | 12 Min. (200^{o}C) |
| Lackauflage (g/Quadratmeter) | | 12 | 12 |

### Vergleichsbeispiel: Formulierung eines Beschichtungsmittels BM' auf Basis eines PVC-Organosols

Aus den folgenden in Tabelle 2 aufgeführten Komponenten wird das Beschichtungsmittel BM' Mischen formuliert.

**Tabelle 1**

| Das Beschichtungsmittel BM' | | | |
|---|---|---|---|
| (Angaben jeweils in Gew.-%) | | BM' | |
| 1. | Epoxidharz | 1,0 | |
| | (Epikote 828 der Fa. Shell) | | |
| 2. | Polyvinylchlorid | 27,0 | |
| | Korngröße nach DIN 53195: | | |
| | 99% < 30 Mikrometer | | |
| | Dichte nach DIN 53479: 1,39 g/cm3 | | |
| | K-Wert nach DIN 53726: 70 | | |
| | Schüttdichte nach DIN 53468: 0,28 g/cm3 | | |
| 3. | Polyesterharz | 38,5 | |
| | (Uravar 2901L der Fa. DSM) | | |
| 4. | Phenolharz | | |
| | Phenodur PR 307 der Fa.Hoechst AG | 2,0 | |
| 5. | Additive | | |
| | Lancowax TF 1780F der Fa.Langer | 0,8 | |
| | Phosphorsäure (85%ig) | 0,1 | |
| 6. | Lösemittel | | |
| | Solvesso ^{R} 100 der Fa.Shell | 18,6 | |
| | Solvesso ^{R} 150 der Fa.Shell | 7,0 | |
| | Butylglykol | 5,0 | |

| Eigenschaften des Beschichtungsmittels BM': | | | |
|---|---|---|---|
| Festkörper (15 Min., 200 Grad C) | | 45% | |
| Viskosität (DIN4-Becher, 20 Grad C) | | 90 s | |
| Farbe | | goldfarben | |

| Auftrag des Beschichtungsmittels: BM' | | | |
|---|---|---|---|
| Trocknung: | | 14 s (250^{o}C) | 12 Min. (210^{o}C) |
| Lackauflage (g/Quadratmeter): | | 12 | 12 |

### Beispiel 3: Prüfung der Eigenschaften der mit den erfindungsgemäßen Beschichtungsmitteln BM1 und BM2 bzw. dem Beschichtungsmittel BM' gemäß Vergleichsversuch hergestellten Beschichtungen

Die Prüfung der resultierenden Beschichtungen erfolgte durch die Beurteilung folgender Eigenschaften:
1. Sterilisations- und Pasteurisationsbeständigkeit:
   Die Sterilisationsbeständigkeit wird durch Sterilisation der beschichteten Blechabschnitte und Clubdosen im Autoklav der Firma Webeco bei 129 Grad C während einer Zeit von 30 Minuten unter Einwirken von Wasser und 3%iger Essigsäure (HAc) ermittelt.
   Die Pasteurisationsbeständigkeit wird durch Pasteurisation der beschichteten Blechabschnitte und Clubdosen im oben genannten Autoklaven bei 100 Grad C während einer Zeit von 30 Minuten unter Einwirken von Wasser und 3%iger Essigsäure (HAc) ermittelt.
   Im Anschluß an die Sterilisation bzw. Pasteurisation erfolgt eine Belastung der Prüfstücke mit Kupfersulfatlösung (10% Kupfersulfat und 10% konz. Salzsäure in Wasser) während einer Einwirkzeit von 3 Minuten bei Raumtemperatur.
   Danach erfolgt eine Beurteilung der Haftung nach DIN 53151, sowie eine visuelle Beurteilumg der Blushing (Wasseraufnahme) und der Porosität der Beschichtungen. (visuelle Beurteilung der Blushing und der Porosität: 0 = sehr gut; 5 = sehr schlecht).
2. Beständigkeit gegen Methylethylketon (MEK):
   Die Beurteilung der MEK-Beständigkeit erfolgt mittels eines mit einem Baumwoltuch umwickeltes 1kg-Gewicht, wobei das Baumwolltuch mit MEK getränkt ist, das auf dem beschichteten Blechabschnitt in Doppelhüben hin- und herbewegt wird.
3. Flexibilitätsprüfung per Wedgebend-Test:
   Der Wedgebend-Test wird gemäß Merkblatt 11, Teil 5, Verpackungsrundschau 25(6) (1974), technisch-wissenschaftliche Beilage, Seiten 47 und 48, durchgeführt.

In Tabelle 3 sind die Ergebnisse der Prüfungen dargestellt:

| | BM1 | BM2 | BM' |
|---|---|---|---|
| | | | |

| Sterilisation (Blushing/Haftung/Porosität): | | | |
|---|---|---|---|
| in Wasser | 0/Gt0/0 | 0/Gt0/0 | 3/Gt0/0 |
| in 3%iger HAc | 0/Gt0/0 | 0/Gt0/0-1 | 3-4/Gt0/2-3 |

| Pasteurisation (Blushing/Haftung/Porosität): | | | |
|---|---|---|---|
| in Wasser | 0/Gt0/0 | 0/Gt0/0 | 0/Gt0/0 |
| in 3%iger HAc | 0/Gt0/0 | 0/Gt0/0 | 2/Gt0/1 |
| MEK-Beständigkeit (Doppelhübe: jeweils keine Filmbeschädigung) | >100 | >100 | 5-10 |
| Wedgebend-Test (mm): | 20-23 | 20-25 | 25-30 |

## Patentansprüche

1. Beschichtungsmittel für die Beschichtung von Blechemballagen, enthaltend:
A) 20 bis 70 Gew.-% eines Bindemittels bestehend aus:
Aa) 10 bis 80 Gew.-Teilen mindestens eines Epoxidharzes mit einem zahlenmittleren Molekulargewicht Mn von 300 bis 10.000 Dalton,
Ab) 1 bis 30 Gew.-% mindestens einer niedermolekularen Di- und/oder Polycarbonsäure mit Alkylengruppen, die mindestens zwei C-Atome aufweisen, zwischen den Carboxylgruppen und
Ac) 5 bis 50 Gew.-Teilen mindestens eines organischen Lösemittels,
B) 1 bis 20 Gew.-% mindestens eines Phenolharzes,
C) 0 bis 10 Gew.-% mindestens eines Aminoplastharzes,
D) 0 bis 10 Gew.-% mindestens eines thermoplastischen Harzes,
E) 0 bis 35 Gew.-% Pigmente und/oder Füllstoffe,
F) 0 bis 10 Gew.-% Hilfsstoffe und/oder Additive sowie
G) 5 bis 50 Gew.-% mindestens eines organischen Lösemittels, wobei die Summe der Anteile A) bis G) 100 Gew.-% ausmacht.

2. Beschichtungsmittel nach Anspruch 1,
dadurch gekennzeichnet, daß es
30 bis 65 Gew.-% der Komponente A),
2 bis 15 Gew.-% der Komponente B),
0 bis 5 Gew.-% der Komponente C),
0 bis 5 Gew.-% der Komponente D),
0 bis 30 Gew.-% der Komponente E),
1 bis 10 Gew.-% der Komponente F) und
10 bis 40 Gew.-% der Komponente G)
enthält, wobei die Summe der Komponenten A) bis G) 100 Gew.-%, bezogen auf das Beschichtungsmittel, ausmacht.

3. Beschichtungsmittel nach einem der Ansprüche 1 oder 2, dadurch gekennzeichnet, daß das als Komponente Aa) eingesetzte Epoxidharz ein zahlenmittleres Molekulargewicht Mn zwischen 350 und 6000 Dalton aufweist.

4. Beschichtungsmittel nach einem der Ansprüche 1 bis 3, dadurch gekennzeichnet, daß die als Komponente Ab) eingesetzte niedermolekulare Di- und/oder Polycarbonsäure mindestens eine Alkylengruppe zwischen den Carboxylgruppen aufweist, die aus mindestens 3, vorzugsweise aus mindestens 4 C-Atomen besteht.

5. Beschichtungsmittel nach einem der Ansprüche 1 bis 4, dadurch gekennzeichnet, daß die als Komponente Ab) eingesetzte niedermolekulare Di- und/oder Polycarbonsäure eine Dimerfettsäure und/oder eine Trimerfettsäure mit mindestens 18 C-Atomen pro Molekül ist.

6. Beschichtungsmittel nach einem der Ansprüche 1 bis 5, dadurch gekennzeichnet, daß das als Komponente B) eingesetzte Phenolharz ein Reaktionsprodukt von Phenol, substituierten Phenolen und/oder Bisphenol-A mit Formaldehyd ist, dessen Methylolgruppen mit niederen Alkoholen verethert sind.

7. Verfahren zur Beschichtung von Blechemballagen, dadurch gekennzeichnet, daß das Beschichtungsmittel gemäß einem der Ansprüche 1 bis 6 aufgebracht und eingebrannt wird.

8. Verfahren nach Anspruch 7,
dadurch gekennzeichnet, daß das Beschichtungsmittel auf Bleche in Tafelform aufgebracht und eingebrannt wird und die solchermßen beschichteten Bleche zu Blechemballagen weiterverarbeitet werden.

9. Verfahren nach Anspruch 7,
dadurch gekennzeichnet, daß das Beschichtungsmittel auf Blechbänder im Bandbeschichtungsverfahren aufgebracht und eingebrannt wird und die solchermaßen beschichteten Blechbänder zu Blechemballagen weiterverarbeitet werden.

10. Verwendung der Beschichtungsmittel nach einem der Ansprüche 1 bis 6 zur Beschichtung von Blechemballagen.

11. Verwendung nach Anspruch 10,
dadurch gekennzeichnet, daß die Blechemballagen aus Aluminiumblech bestehen.

12. Verwendung nach einem der Ansprüche 10 oder 11,
dadurch gekennzeichnet, daß die Blechemballagen zur Lagerung von Lebensmitteln eingesetzt werden, insbesondere als Getränkedosen oder als Fischdosen mit Aufreißdeckeln.
